# EUROPEAN PATENT SPECIFICATION

(11) **EP 2 940 045 B1**
(45) Date of publication and mention of the grant of the patent: **02.11.2016**
(21) Application number: 15165315.1
(22) Date of filing: 28.04.2015
(51) Int. Cl.: C08B 37/08, A61K 9/16, C08J 3/12, C08L 5/08

(54) **PROCESS FOR THE PRODUCTION OF SOLUBLE CHITOSANE AGGREGATES**
VERFAHREN ZUR HERSTELLUNG VON LÖSLISCHEN CHITOSAN AGGREGATEN
PROCEDE POUR LA PREPARATION D'AGREGATS DE CHITOSANE SOLUBLES

(30) Priority: 28.04.2014 IT MI20140778
(43) Date of publication of application: 04.11.2015
(73) Proprietor: Bioenol S.r.l., 27043 San Cipriano Po (PV) (IT)
(72) Inventor: Maini, Michele, 27047 Santa Maria della Versa (PAVIA) (IT); Benevento, Gianpaolo, 12084 Mondovì (CUNEO) (IT)
(74) Representative: Biggi, Cristina

(56) References cited:
- WO-A1-2011/018809
- WO-A2-2004/037899
- FR-A1- 2 599 048
- US-A- 5 654 009
- US-A1- 2004 176 477

## Description

The present invention relates to a process for the preparation of chitosan aggregates by fluid bed granulation. Said aggregates are characterised in that they are instantly soluble in water, even when the water is cold, without the aid of stirring or further physical and/or mechanical treatments.

### Background art

Chitosan is a linear polysaccharide composed of D-glucosamine and N-acetyl-D-glucosamine, linked through β(1-4) bonds.

Chitosan is used in various technical fields, and can be obtained by treating chitin with a basic aqueous solution at high temperatures. Generally speaking, chitosan is classified as being of animal origin, generally obtained from the exoskeleton of crustaceans (crabs, prawns, etc.), or of fungal origin, obtained for example from the species *Aspergillus niger* and *Agaricus bisporus.*

One of the main uses of chitosan is based on its ability to flocculate lipids and proteins, due to the fact that it is able to act as a polycation in acidic solutions. In this manner, chitosan forms complexes with negatively charged molecules present in the solution, or in the colloidal state, and induces flocculation thereof.

In the food industry, chitosan and several derivatives thereof have also been studied for a series of activities which include, among others, antimicrobial, antioxidant and nutritional ones. The possible applications of chitin, chitosan and the derivatives thereof are thus many, including bioconversion for the production of value-added food products, preservation of food against microbial deterioration, formation of biodegradable films, recovery of waste material from wastewater, water purification and clarification and deacidification of fruit juices, musts and wine. An application of this polysaccharide has also been suggested in the oenological field, since it has been demonstrated that chitosan has a great affinity for the phenolic compounds implicated in the phenomenon of browning of white wines and that its use, in terms of sedimentation profile, would be compatible with the techniques and equipment currently used in vinification practices.

The use of fungal chitosan in winemaking can have application above all as an antibacterial and bacteriostatic agent, in particular against the yeast *Brettanomyces bruxellensis.*

To date, the majority of chitosan-based antibacterial food compositions in oenology have been characterised by low solubility, so that long times of contact between chitosan and wine can sometimes be necessary in order for it to be able to provide the desired bacteriostatic action. Moreover, again in the oenological field, according to EU and OIV (International Organisation of Vine and Wine) regulations, the use of chitosan is allowed only if of fungal origin. There are also known processes for the preparation of chitosan in soluble forms, which comprise steps in the liquid phase and subsequent atomisation treatments (see for example WO2009/123713A1 and US 6255085).

The applicants have now found a process for the preparation of soluble chitosan by aggregation with acids in a fluid bed granulator. In this manner, the product obtained can be conveniently used, for example, in oenology as a bactericidal agent for the treatment of wine, avoiding the problems of solubility derived from the use of similar products known in the art.

### Summary of the invention

In a first aspect, the invention relates to a process for the preparation of chitosan aggregates instantly soluble in cold water by fluid bed granulation, said process comprising the contact between chitosan and an organic acid in the presence of an aqueous granulation liquid.

The acid used in the present process can be either solid or liquid. In the former case, it will be premixed with chitosan and then subjected to contact with the granulation liquid inside the fluid bed granulator; in the latter case, on the other hand, the acid in liquid form will be suitably mixed with water (forming an acidic aqueous granulation liquid) and then placed in contact with solid chitosan inside the fluid bed granulator.

### Description of the figure

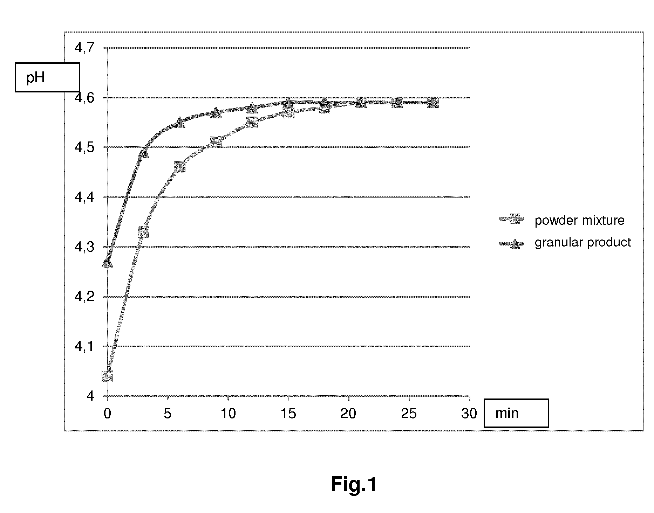

Figure 1: pH/time trend of an aqueous solution containing the chitosan aggregate of the invention and of a chitosan/acid admixture prepared by mechanical mixing of the two components. The pH tends to rise as the basic chitosan dissolves. In the case of mechanical mixing of powders, the pH reaches a constant value no sooner than after 18-21 minutes. In the case of the granular product of the invention, already after 12 minutes the pH no longer varies appreciably, a sign of the complete solubilisation of the chitosan.

### Detailed description

"Instantly soluble in cold water" means that the chitosan aggregate obtained from the present process is capable of dissolving without leaving any substantial residues or sediment in aqueous liquids, at room temperature (i.e. in the range of about 15° C to 40° C) or even lower, even without the aid of stirring or physical treatments in general.

The present process enables the starting chitosan (insoluble) to be converted into a final granular derivative, highly soluble in water even when the water is cold, using a fluid bed granulator operating under controlled humidity and temperature conditions in the presence of an acid and an aqueous granulation liquid.

The process of the invention can be conducted using, for example, a fluid bed granulator of the type known in the art. In general, said apparatus comprises a granulation chamber, a system for spraying the granulation liquid, a pump for regulating the air or inert gas flow, and a system for collecting the final granular product obtained.

The present process can be applied both to chitosan of fungal origin and to that of animal origin. Preferably, the chitosan used in the process of the invention is of fungal origin, for example a commercially available chitosan. Advantageously, the applicants have now found that it is possible to obtain a chitosan derivative in the form of aggregates which can also be used in oenology, as an antibacterial agent. In the oenological field, in fact, only the use of chitosan of fungal origin, rather than that of animal origin, is allowed.

The present process thus lends itself to the preparation of chitosan aggregates to be used, preferably, as a bactericidal agent against the yeast *Brettanomyces bruxellensis.*

In one embodiment, the acid used is in solid form. In this case, the process of the invention comprises an intimate premixing of the solid chitosan powders and acid, followed by contact in the fluid bed granulator with a suitable granulation liquid, preferably water. Typically, the acid is in the form of powder or crystals.

In a further embodiment, the acid is in liquid form. In this case, the present process comprises the formation of the aggregate product by placing the starting chitosan in contact with a granulation liquid in the form of an aqueous solution of the selected acid. Preferably, said acidic aqueous solution has a concentration comprised between about 5 and 50%, preferably between about 10 and the 25%.

The amount of acid can vary from about 0.5 to 1.5 (parts by weight pbw) relative to the chitosan, typically depending on the type of acid used. In the case of solid acids, the amount used is preferably 1:1 pbw, whilst in the case of liquid acids it is about 0.8:1 pbw.

In any case, the amounts of acid and water are such that the granule reaches a final pH of less than 5, preferably less than 4. Preferred acids are selected from among: ascorbic, lactic, tartaric, acetic, succinic, formic, propionic, citric, malic and butyric acid and mixtures thereof.

Particularly preferred are acids in solid form or solid/liquid mixtures, even more preferably selected from among: citric, ascorbic, lactic, tartaric acid and mixtures thereof.

The applicant has in fact found that when the granulation process of the invention is conducted in a fluid bed granulator under conditions of controlled humidity using one of the latter acids, it is possible to use the acid while remaining within the limits established by current regulations, without significantly altering the acid profile of the beverage to be treated. Moreover, such acids are neither hazardous nor corrosive for people or the equipment under the normal conditions of use described.

In the fluid bed, the solid component comprising chitosan and possibly an acid is suspended using a jet of air or inert gas, according to methods known to the person skilled in the art and typical of said apparatus. Generally speaking, the flow inside the granulator is a flow of air or an inert gas. In both cases the pressure of the flow is preferably comprised between about 2 and 5 atmospheres.

The aqueous granulation liquid is preferably selected between: deionised or distilled water. In the present process, the selected liquid is used at a temperature comprised between about 20° C and 50° C, preferably between about 20° C and 30° C.

The liquid can be sprayed in the form of micro-droplets at a rate comprised from about 300 to 1500 cc/min, preferably from 300 to 750 cc/min. The amount of liquid is comprised from about 15.0 to 35.0 l/50Kg of chitosan, preferably comprised from about 20 to 30 cc/50kg of chitosan.

Inside the fluid bed granulator, after contact has taken place between the chitosan and acid (whether the latter is premixed in solid form or dissolved in water to form the acidic granulation liquid), the granules formed are made to dry by suspension in the air or inert gas flow, preferably at a temperature comprised between about 35° C and 60° C, so as to obtain a final granule moisture comprised from about 4% to 10% by weight relative to the total weight of the granule.

Due to the above experimental conditions, it is possible to carry out the granulation process of the invention in such a way that the particles of acid and chitosan, in the presence of the aqueous granulation liquid, become slightly sticky and take on physical characteristics such as being capable of forming final soluble aggregates.

In addition to the above-specified components, other additives can be present in the reactor, such as: cellulose, yeast derivatives (inactive yeast, yeast cell wall, yeast extract, mannoproteins), animal proteins (albumin, casein, gelatine), vegetable proteins (pea or potato proteins), gum arabic, maltodextrin, native or modified starches, glucomannans (Konjak gum), galactomannans (carob, tare or guar gum) and the like.

In these cases, the final chitosan aggregate will also comprise a certain amount of said additive(s). Typically, the additives are used to improve and/or speed up the process of dispersion in water, and can also have synergistic effects with the action of the product in the beverage.

At the end of the process, the granular chitosan product collects on the bottom of the granulator and can be easily recovered.

The particle sizes of the aggregates obtained are comprised between about 100 µm (micron) and 500 microns, preferably between about 200 and 400 microns, and even more preferably between about 250 and 350 microns.

The particle size distribution of the aggregates is measured by means of a specific series of sieves arranged in a stack, wherein the mesh opening decreases progressively from top to bottom.

The sieve stack employed belongs to the ASTM series, and each sieve has a height of 50 mm. Each sieve is weighed beforehand on an analytical balance with a sensitivity of 0.01 g.

The amount of each sample is set at around 25 g and is subsequently placed inside the "highest" sieve (i.e. the one having the largest openings); the whole stack is then subjected to the action of a mechanical shaker for a period of 5 minutes, in order to obtain a complete screening of the material.

Subsequently, each sieve is weighed and a determination is made of every single fraction held inside each sieve so as to calculate the percentage thereof relative to the total initial weight.

The fraction passing through the last sieve (with openings with a size of 52 µ) is indicated as "< 52 µ", whereas any fraction remaining on the top sieve (with openings with a size of 250 µ) is indicated as "> 250 µ".

As described above in detail, the present process is capable of controlling the granulation of chitosan in such a way as to obtain a final product with excellent solubility even in a cold solution. In particular, the applicant has found that appreciable final results can be obtained depending, for example, on the amount of granulation liquid used, the rate and temperature of the air or inert gas flow and the pH obtained during processing.

The granular chitosan product obtained is characterized by high solubility in water even when the water is cold, as demonstrated by the experimental examples below. Due to the intrinsic structure of the chitosan-acid agglomerate that is formed with the present process, in fact, the product obtained can also be used in oenology as an antibacterial agent. Moreover, as a result of its high solubilisation speed, the present granular chitosan ensures a high rapidity of antimicrobial action, in particular against the yeast *Brettanomyces bruxellensis.*

A further advantage lies in the fact that by obtaining almost complete solubilisation, there is no need for any mechanical or physical treatments, for example stirring, in order to increase the solubility of the product. This is particularly convenient if large amounts need to be treated, for example of wine, contained inside tanks or barrels. The possibility of avoiding stirring or mechanical treatment may be particularly appreciated by the person skilled in the art.

As may be inferred from the present description, the process of the invention makes it possible to obtain a soluble granular chitosan whilst avoiding intermediate reactions with other chemical compounds (for example lipase) or intermediate solubilisation and precipitation treatments, as occurs, in contrast to similar prior art processes used for the preparation of soluble functionalised chitosan.

The invention will now be illustrated with the following non-limiting experimental examples.

### EXPERIMENTAL EXAMPLES

### Solubility tests on an aggregated product obtained with the present process, compared to a product obtained by mechanical mixing of chitosan and a solid acid.

### Materials:

KitoZyme fungal chitosan Dry Matter 94.05%
Ascorbic acid Dry Matter 99.55%
Solubilised granular chitosan (50% fungal chitosan 50% ascorbic acid) Dry Matter 96.85%
Distilled water
150 cc beaker: Diameter 6.4 cm; height 7.8 cm
Magnetic stir bar length 3 cm
Magnetic stirrer.

### Example 1.1 solubility test on a preparation of granular chitosan obtained with the process of the invention.

1.00 g of granular chitosan obtained according to the present invention using a fluid bed granulator was weighed in a beaker. The weight was brought to 100 g with distilled water. A magnetic stir bar was immediately introduced. The beaker was placed on a magnetic stirrer and the electrode was immersed to measure the pH. The stirrer was brought to 200 rpm. The 0 time reading was taken 5" after the stirrer was started and subsequent readings at 3' intervals.

### Example 1.2 (comparative): solubility test on a powder mixture obtained by mechanical mixing of fungal chitosan and ascorbic acid.

0.50 g of ascorbic acid and 0.50 of fungal chitosan were weighed in a beaker. The powders were mechanically mixed together and brought to 100 g with distilled water. A magnetic stir bar was immediately introduced. The beaker was placed on a magnetic stirrer and the electrode was immersed to measure the pH. The stirrer was brought to 200 rpm. The 0 time reading was taken 5" after the stirrer was started and subsequent readings at 3' intervals.

### Results:

**The pH values are shown in the table and in figure 1:**

| **Time** | **Powder mixture Example 1.2 (comparative)** | **Granular Example 1.1** |
|---|---|---|
| **Minutes** | **pH** | **pH** |
| 0 | 4.04 | 4.27 |
| 3 | 4.33 | 4.49 |
| 6 | 4.46 | 4.55 |
| 9 | 4.51 | 4.57 |
| 12 | 4.55 | 4.58 |
| 15 | 4.57 | 4.59 |
| 18 | 4.58 | 4.59 |
| 21 | 4.59 | 4.59 |
| 24 | 4.59 | 4.59 |
| 27 | 4.59 | 4.59 |

As can be seen from the table and the appended figure 1, the pH tends to increase as a result of the gradual solubilisation of the chitosan. In the case of the powder mixture of the comparative example 1.2, a constant pH value is not reached before 18-21 minutes. In the case of the granular product of example 1.1, in contrast, after just 12 minutes the pH no longer varies appreciably, a sign of the complete solubilisation of the chitosan.

## Claims

1. Process for the preparation of chitosan aggregates by fluid bed granulation, comprising the contact between chitosan and an organic acid in the presence of an aqueous granulation liquid, **characterized in that**:
- said organic acid has a liquid form, it is admixed with the aqueous granulation liquid and contacted with chitosan inside the fluid bed granulator; or
- said acid has a solid form, it is premixed with the chitosan, and subjected to the contact with the granulation liquid inside the fluid bed granulator.

2. Process according to claim 1, wherein said acid has a solid or liquid form, and it is selected from: ascorbic, lactic, tartaric, acetic, succinic, formic, propionic, citric, malic acid, butyric acid and mixtures thereof.

3. Process according to the preceding claims, wherein said acid is used in amounts comprised from 0.5 and 1.5 part by weight with respect to the chitosan.

4. Process according to the preceding claims wherein said chitosan is of fungal origin.

5. Process according to the preceding claims, wherein said granulation liquid is used within the fluid bed granulator at a temperature comprised between 20° C and 50° C, preferably between 20° C and 30° C.

6. Process according to the preceding claims, wherein said granulation liquid is sprayed in the form of micro-droplets, at a rate comprised from 150 to 1500 cc/minute, preferably from 300 to 750 cc/minute.

7. Process according to the preceding claims, wherein the amount of said granulation liquid is comprised from 15.0 to 30.0 l/50Kg of chitosan, preferably from 20 to 35 l/50kg.

8. Process according to the preceding claims wherein the formed chitosan granules are dried by suspension in an air or inert gas flow, at a temperature comprised from 35° C and 65° C.

9. Process according to the preceding claims, wherein said granulation liquid is distilled or deionized water.

## Patentansprüche

1. Verfahren zur Herstellung von Chitosanaggregaten durch Wirbelschichtgranulation, umfassend den Kontakt zwischen Chitosan und einer organischen Säure in Anwesenheit von einer wässerigen Granulationsflüssigkeit, **dadurch gekennzeichnet, dass**:
- genannte organische Säure in flüssiger Form ist, mit der wässerigen Granulationsflüssigkeit beigemengt und im Wirbelschichtgranulator mit Chitosan in Berührung gesetzt wird; oder
- genannte Säure in fester Form ist, mit Chitosan vorgemischt ist, und im Wirbelschichtgranulator dem Kontakt mit der Granulationsflüssigkeit ausgesetzt ist.

2. Verfahren nach Anspruch 1, wobei genannte Säure in fester oder flüssiger Form ist, und ausgewählt ist aus: Ascorbin-, Milch-, Wein-, Essig-, Succinyl-, Ameisen-, Propan-, Zitronen-, Apfelsäure, Buttersäure und Mischungen davon.

3. Verfahren nach den vorangehenden Ansprüchen, wobei genannte Säure in Mengen benutzt wird zwischen 0.5 und 1.5 Teilen gewichtsmäßig in Bezug auf Chitosan.

4. Verfahren nach den vorangehenden Ansprüchen, wobei Chitosan pilzlichen Ursprungs ist.

5. Verfahren nach den vorangehenden Ansprüchen, wobei genannte Granulationsflüssigkeit innerhalb des Wirbelschichtgranulators bei einer Temperatur zwischen 20 °C und 50 °C, vorzugsweise zwischen 20 °C und 30 °C benutzt wird.

6. Verfahren nach den vorangehenden Ansprüchen, wobei genannte Granulationsflüssigkeit in Form von Mikro-Tröpfchen gesprüht wird, mit einer Rate von 150 bis 1500 cc/Minute, vorzugsweise von 300 bis 750 cc/Minute.

7. Verfahren nach den vorangehenden Ansprüchen, wobei die Menge der genannten Granulationsflüssigkeit zwischen 15.0 und 30.0 l/50Kg Chitosan liegt, vorzugsweise von 20 bis 35 l/50Kg.

8. Verfahren nach den vorangehenden Ansprüchen, wobei das geformte Chitosan-Granulat durch Suspension in einem Luft- oder Inertgasstrom bei einer Temperatur zwischen 35 °C und 65 °C getrocknet wird.

9. Verfahren nach den vorangehenden Ansprüchen, wobei genannte Granulationsflüssigkeit destilliertes oder deionisiertes Wasser ist.

## Revendications

1. Procédé de préparation d'agrégats de chitosane par granulation en lit fluidisé, comprenant le contact entre le chitosane et un acide organique en présence d'un liquide de granulation aqueux, **caractérisé en ce que** :
- ledit acide organique a une forme liquide, il est mélangé au liquide de granulation aqueux et placé au contact du chitosane au sein du granulateur en lit fluidisé ; ou
- ledit acide possède une forme solide, il est mélangé au chitosane et soumis au contact du liquide de granulation au sein du granulateur en lit fluidisé.

2. Procédé selon la revendication 1, dans lequel ledit acide possède une forme solide ou liquide et est sélectionné à partir de: acide ascorbique, lactique, tartrique, acétique, succinique, formique, propionique, citrique, malique, butyrique et leurs mélanges.

3. Procédé selon les revendications précédentes, dans lequel ledit acide est utilisé dans une quantité comprise entre 0,5 et 1,5 partie en poids par rapport au chitosane.

4. Procédé selon les revendications précédentes, dans lequel ledit chitosane est d'origine fongique.

5. Procédé selon les revendications précédentes, dans lequel ledit liquide de granulation est utilisé au sein du granulateur en lit fluidisé à une température comprise entre 20 et 50 °C, de préférence entre 20 et 30 °C.

6. Procédé selon les revendications précédentes, dans lequel ledit liquide de granulation est pulvérisé sous la forme de micro-gouttelettes, à un débit compris entre 150 et 1500 c³/minute, de préférence entre 300 et 750 c³/minute.

7. Procédé selon les revendications précédentes, dans lequel la quantité dudit liquide de granulation est comprise entre 15,0 et 30,0 l/50 kg de chitosane, de préférence entre 20 et 35 l/50 kg.

8. Procédé selon les revendications précédentes, dans lequel les granules de chitosane formées sont séchées par suspension dans un écoulement d'air ou de gaz inerte, à une température comprise entre 35 et 65 °C.

9. Procédé selon les revendications précédentes, dans lequel ledit liquide de granulation est de l'eau distillée ou déionisée.
